# EUROPEAN PATENT APPLICATION

(11) **EP 4 276 234 A1**
(43) Date of publication of application: **15.11.2023**
(21) Application number: 22808575.9
(22) Date of filing: 28.07.2022
(51) Int. Cl.: D06F 39/02

(54) **DISPENSER BOX, DETERGENT DISPENSING APPARATUS, WASHING DEVICE, AND WASHING DEVICE KIT**

(30) Priority: 31.03.2022 CN 202210346549; 31.03.2022 CN 202220767157 U
(71) Applicant: WUXI LITTLE SWAN ELECTRIC CO., LTD., Wuxi, 214028 Jiangsu (CN)
(72) Inventor: QI, Huan, Wuxi, 214028 Jiangsu (CN); DING, Pengfei, Wuxi, 214028 Jiangsu (CN); WANG, Yuqing, Wuxi, 214028 Jiangsu (CN); ZHOU, Huihui, Wuxi, 214028 Jiangsu (CN)
(74) Representative: Whitlock, Holly Elizabeth Ann
(86) International application number: PCT/CN2022/108715
(87) International publication number: WO 2023/184809

(57) **Abstract**

Embodiments of the application provide a dispenser cartridge, a detergent delivery apparatus, a washing device and a washing device kit. The dispenser cartridge includes a cartridge body and a first limitation member. The cartridge body has at least one mounting groove, one of which is a first mounting groove. The first limitation member is arranged in the first mounting groove, to constrain a detergent bottle or a hand delivery cartridge in the first mounting groove, such that the detergent bottle and the hand delivery cartridge are interchangeably arranged in the first mounting groove. In the dispenser cartridge of the embodiment of the application, the first mounting groove is used as a generic mounting groove, which is not only suitable for mounting the hand delivery cartridge, but also suitable for mounting the detergent bottle. Manufacturers may select and match dispenser cartridges according to product model configuration requirements of washing devices, so that the dispenser cartridge with the same structure may be used generally, which may improve generalization rate of parts. For washing devices with different configurations, the dispenser cartridge may be manufactured by the same mold, which reduces cost input of the mold and shortens product development cycle.

## Description

### CROSS-REFERENCE TO RELATED APPLICATIONS

The application is based on and claims priorities to Chinese Patent Application No. 202210346549.0 filed on March 31, 2022 and Chinese Patent Application No. 202220767157.7 filed on March 31, 2022, the disclosure of which are hereby incorporated by reference in their entireties.

### TECHNICAL FIELD

The application relates to the technical field of laundry washing and care, in particular to a dispenser cartridge, a detergent delivery apparatus, a washing device and a washing device kit.

### BACKGROUND

Taking washing machines as an example, different types of washing machines have different structures and functions of detergent delivery apparatuses, which leads to a low generalization rate of parts of detergent delivery apparatus among different types of washing devices.

### SUMMARY

In view of this, it is desirable for embodiments of the application to provide a dispenser cartridge, a detergent delivery apparatus, a washing device and a washing device kit, which may at least generalize the dispenser cartridge with respect to different detergent delivery configurations, to improve generalization rate of parts.

An embodiment of the application provides a dispenser cartridge, including a cartridge body and a first limitation member.

The cartridge body has at least one mounting groove, one of which is a first mounting groove.

The first limitation member is arranged in the first mounting groove, to constrain a detergent bottle or a hand delivery cartridge in the first mounting groove, such that the detergent bottle and the hand delivery cartridge are interchangeably arranged in the first mounting groove.

In some implementations, the first limitation member may include a front end limitation structure and a rear end limitation structure, at least one of the front end limitation structure or the rear end limitation structure is elastically deformed under an external force, to constrain the detergent bottle or the hand delivery cartridge between the front end limitation structure and the rear end limitation structure.

In some implementations, the rear end limitation structure may include a first elastic arm having a first end connected to the cartridge body and a second end used as a free end, and the second end of the first elastic arm extends into an opened portion of the first mounting groove.

In some implementations, the rear end limitation structure may include a stopping structure arranged at the opened portion of the first mounting groove and stopping-fitted with the detergent bottle or the hand delivery cartridge in a front-rear direction, and the first elastic arm is located behind the stopping structure.

In some implementations, the front end limitation structure may be recessed inwardly from a part of a front side wall of the first mounting groove, and the recess has a wall thickness smaller than a wall thickness of a structure around the recess, to allow the rear end limitation structure to be elastically deformed under the external force.

In some implementations, the at least one mounting groove may include multiple mounting grooves, of which another mounting groove is a second mounting groove for mounting another detergent bottle therein and having an opened rear side, the first mounting groove and the second mounting groove are arranged side by side in a left-right direction.

In some implementations, a rear side and a top side of the first mounting groove may be opened.

In some implementations, a bottom wall of the first mounting groove may be provided with a first fool-proofing protrusion fitted with the detergent bottle, and a bottom wall of the second mounting groove is provided with a second fool-proofing protrusion fitted with the another detergent bottle, the first fool-proofing protrusion has a shape different from the second fool-proofing protrusion, and/or the first fool-proofing protrusion has a position different from the second fool-proofing protrusion.

In some implementations, the first mounting groove may be the same size as the second mounting groove, to place detergent bottles with same external dimensions therein.

An embodiment of the application provides a detergent delivery apparatus, including the dispenser cartridge described in any embodiment of the application, and a detergent cartridge.

The detergent cartridge includes a cartridge body and a cartridge cover, the cartridge cover is provided with a first water inlet channel having a water outlet located above the first mounting groove to guide water flow to the first mounting groove.

A rear side wall of the cartridge body is provided with a first avoidance opening and a first detergent inlet, the first avoidance opening avoids direct or indirect insertion and extraction fitting between a detergent bottle in the first mounting groove and a drawing opening of a delivery pump, and the first detergent inlet guides a detergent discharged from the delivery pump into the cartridge body.

In some implementations, the at least one mounting groove may include multiple mounting grooves, of which another mounting groove is a second mounting groove for mounting another detergent bottle therein and having an opened rear side, the first mounting groove and the second mounting groove are arranged side by side in a left-right direction.

The cartridge body has a water mixing groove at a bottom thereof, the cartridge cover is provided with a second water inlet channel independent of the first water inlet channel and having a water outlet to guide water flow to the water mixing groove.

The rear side wall of the cartridge body is provided with a second avoidance opening and a second detergent inlet, the second avoidance opening avoids direct or indirect insertion and extraction fitting between a detergent bottle in the second mounting groove and the drawing opening of the delivery pump, and the second detergent inlet guides the detergent discharged from the delivery pump into the cartridge body.

An embodiment of the application provides a washing device, including a drum, a tub, the detergent delivery apparatus described in any embodiment of the application, a water inlet pipeline, and a delivery pump.

The drum is arranged in the tub.

The water inlet pipeline supplies water to the detergent delivery apparatus.

The delivery pump draws a detergent from a detergent bottle placed in the mounting groove.

An embodiment of the application provides a washing device kit, including a washing device, a first detergent bottle, and a second detergent bottle.

The washing device includes a water inlet pipeline, a delivery pump, a tub, a drum arranged in the tub, and the detergent delivery apparatus described in any embodiment of the application.

The first detergent bottle is detachably placed in the first mounting groove.

The second detergent bottle is detachably placed in the second mounting groove.

The delivery pump draws a detergent from the first detergent bottle and a detergent from the second detergent bottle.

The water inlet pipeline is connected to a water inlet of the second water inlet channel, and a water inlet of the first water inlet channel is vacant.

An embodiment of the application provides a washing device kit, including a washing device, a hand delivery cartridge, and a second detergent bottle.

The washing device includes a water inlet pipeline, a delivery pump, a tub, a drum arranged in the tub, and the detergent delivery apparatus described in any embodiment of the application.

The hand delivery cartridge is detachably placed in the first mounting groove and has a delivery chamber, a top side of the delivery chamber has a delivery opening to receive water flow in the first water inlet channel.

The second detergent bottle is detachably placed in the second mounting groove.

The delivery pump draws a detergent from the first detergent bottle and a detergent from the second detergent bottle.

The water inlet pipeline is connected to a water inlet of the first water inlet channel, and a water inlet of the second water inlet channel is vacant.

In the dispenser cartridge of the embodiment of the application, the first mounting groove is used as a generic mounting groove, which is not only suitable for mounting the hand delivery cartridge, but also suitable for mounting the detergent bottle. Manufacturers may select and match dispenser cartridges according to product model configuration requirements of washing devices, so that the dispenser cartridge with the same structure may be used generally, which may improve generalization rate of parts and reduce inventory pressure of sluggish materials. For washing devices with different configurations, the dispenser cartridge may be manufactured by the same mold, which reduces cost input of the mold and shortens product development cycle.

### BRIEF DESCRIPTION OF THE DRAWINGS

FIG. 1 is a schematic structural view of a dispenser cartridge according to an embodiment of the application.
FIG. 2 is a schematic view of the structure shown in FIG. 1 from another perspective.
FIG. 3 is a cross-sectional view along a C-C direction of FIG. 2.
FIG. 4 is a schematic view of fitting of the dispenser cartridge shown in FIG. 1 with a first detergent bottle, a second detergent bottle and a filtering container.
FIG. 5 is a schematic exploded view of the structure shown in FIG. 4.
FIG. 6 is a schematic view of the structure shown in FIG. 4 from another perspective.
FIG. 7 is a cross-sectional view along an A-A direction of FIG. 6.
FIG. 8 is a schematic view of fitting of the dispenser cartridge shown in FIG. 1 with a hand delivery cartridge, a second detergent bottle and a filtering container.
FIG. 9 is a schematic exploded view of the structure shown in FIG. 8.
FIG. 10 is a schematic structural view of a hand delivery cartridge according to an embodiment of the application.
FIG. 11 is a schematic view of the structure shown in FIG. 8 from another perspective.
FIG. 12 is a cross-sectional view along a B-B direction of FIG. 11, in which dashed lines and arrows indicate a flow path of water flow.
FIG. 13 is a schematic view of fitting of a detergent delivery apparatus according to an embodiment of the application with a first detergent bottle, a second detergent bottle and a filtering container.
FIG. 14 is a schematic view of fitting of a detergent delivery apparatus according to an embodiment of the application with a hand delivery cartridge, a second detergent bottle and a filtering container.
FIG. 15 is a schematic structural view of a detergent cartridge according to an embodiment of the application.
FIG. 16 is a schematic structural view of a cartridge body shown in FIG. 15.
FIG. 17 is a cross-sectional view of the structure shown in FIG. 16.
FIG. 18 is a schematic structural view of part of a washing device according to an embodiment of the application.

### DETAILED DESCRIPTION

Implementations of the application are further described in detail below with reference to the accompanying drawings and embodiments. The following embodiments are used to explain the application, but cannot be used to limit scope of the application.

In descriptions of the embodiments of the application, it should be noted that terms "central", "longitudinal", "transversal", "upper", "lower", "front", "rear", "left", "right", "vertical", "horizontal", "top", "bottom", "inside", "outside" or the like indicate orientation or positional relationships based on orientation or positional relationships shown in the drawings, and are merely intended to facilitate the descriptions of the embodiments of the application and simplify the descriptions, and are not intended to indicate or imply that a device or element involved must have a particular orientation or must be constructed and operate in a particular orientation, and thus cannot be understood as limitation to the embodiments of the application. Furthermore, terms "first", "second" and "third" are used for descriptive purposes only and cannot be understood as indicating or implying relative importance.

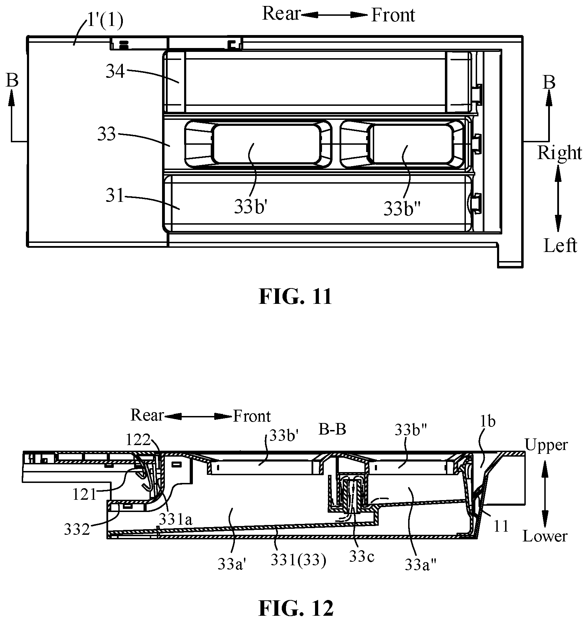

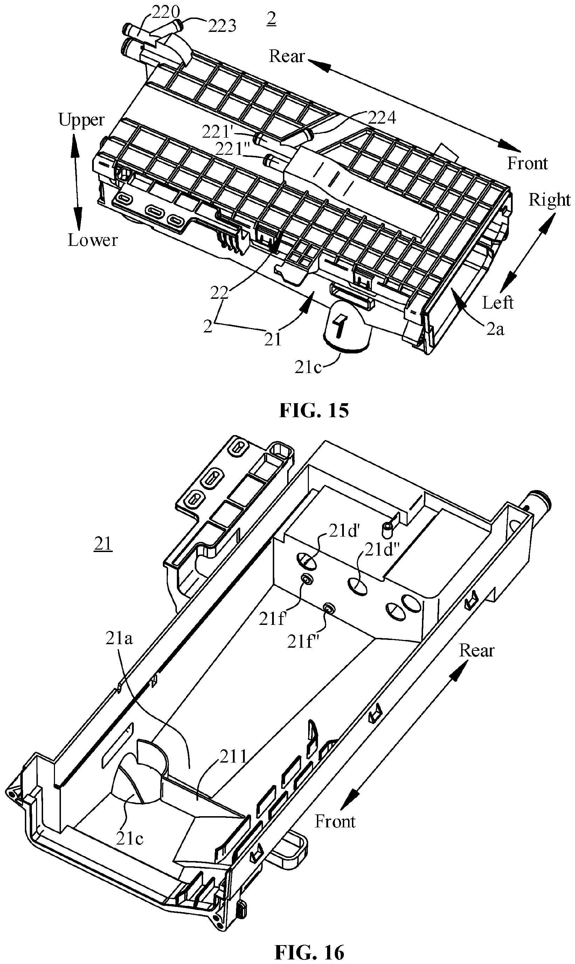

An embodiment of the application provides a detergent delivery apparatus applied to a washing device. Referring to FIG. 12 and FIG. 15, the detergent delivery apparatus includes a dispenser cartridge 1 and a detergent cartridge 2.

An embodiment of the application also provides a washing device, including a drum, a tub, a delivery pump, a water inlet pipeline, and the detergent delivery apparatus described in any of the embodiments of the application.

The drum is arranged in the tub and receives water through the tub.

The water inlet pipeline supplies water to the detergent delivery apparatus.

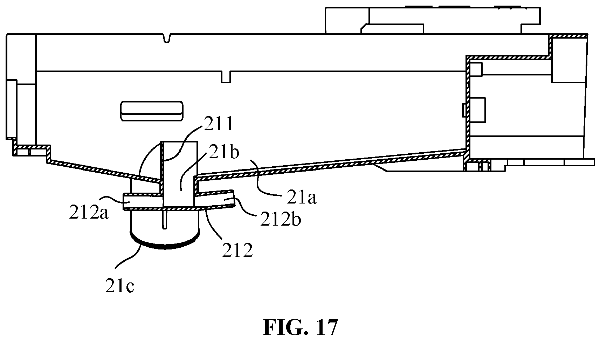

Exemplarily, the washing device includes a door body, a box body, and a door sealing ring 6 (referring to FIG. 17) arranged at a front end of the drum, and the tub is arranged within the box body.

The box body is provided with an opening, and the door body is configured to open or close the opening. The door sealing ring 6 is configured to seal a gap between the tub and the opening of the box body, and when the door body closes the opening, the door body is sealed against the door sealing ring 6.

Referring to FIG. 16 and FIG. 17, the detergent cartridge 2 has a drawing space 2a, and the dispenser cartridge 1 is arranged in the drawing space 2a within the detergent cartridge 2 in a drawable manner. Referring to FIG. 12 and FIG. 15, the dispenser cartridge 1 is in a state of being withdrawn from the drawing space 2a. During normal usage of the washing device, the dispenser cartridge 1 is pushed into the drawing space 2a.

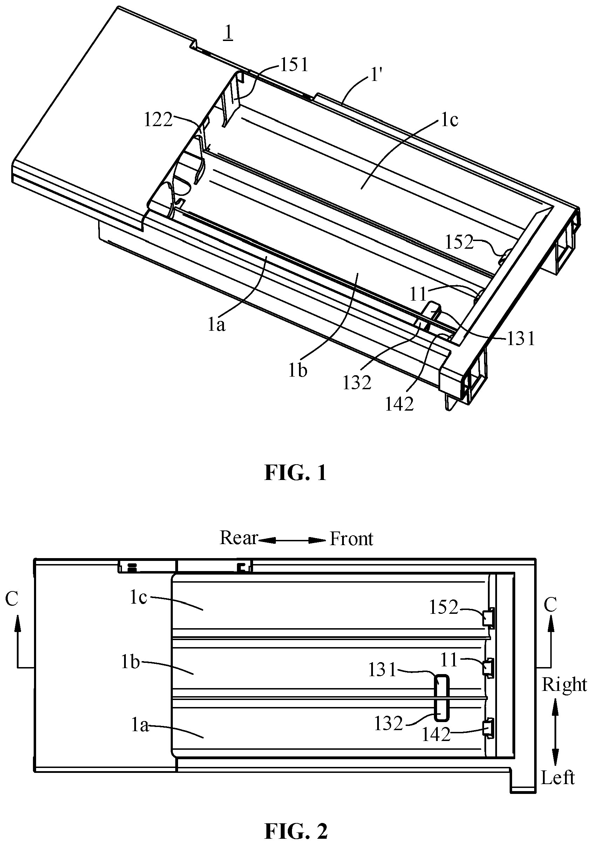

Referring to FIG. 1, FIG. 2 and FIG. 3, the dispenser cartridge 1 includes a cartridge body 1' and a first limitation member.

The cartridge body 1' has at least one mounting groove, one of which is a first mounting groove 1b.

The first limitation member is arranged in the first mounting groove 1b, to constrain a detergent bottle or a hand delivery cartridge 33 in the first mounting groove, such that the detergent bottle and the hand delivery cartridge 33 are interchangeably arranged in the first mounting groove 1b.

In the dispenser cartridge 1 of the embodiment of the application, the first mounting groove 1b is used as a generic mounting groove, which is not only suitable for mounting the hand delivery cartridge 33, but also suitable for mounting the detergent bottle. Manufacturers may select and match dispenser cartridges according to product model configuration requirements of washing devices, so that the dispenser cartridge 1 with the same structure may be used generally, which may improve generalization rate of parts and reduce inventory pressure of sluggish materials. For washing devices with different configurations, the dispenser cartridge may be manufactured by the same mold, which reduces cost input of the mold and shortens product development cycle.

The detergent bottle may receive a detergent, softener, disinfectant, perfume and other detergents with fluid properties.

It should be noted that in some embodiments, the detergent bottle is reusable, and a cap of the detergent bottle is designed to be opened, and a user may open the cap to fill a detergent into the detergent bottle. In other embodiments, the detergent bottle may also be a disposable consumable, and cannot be reused after the detergent is used up.

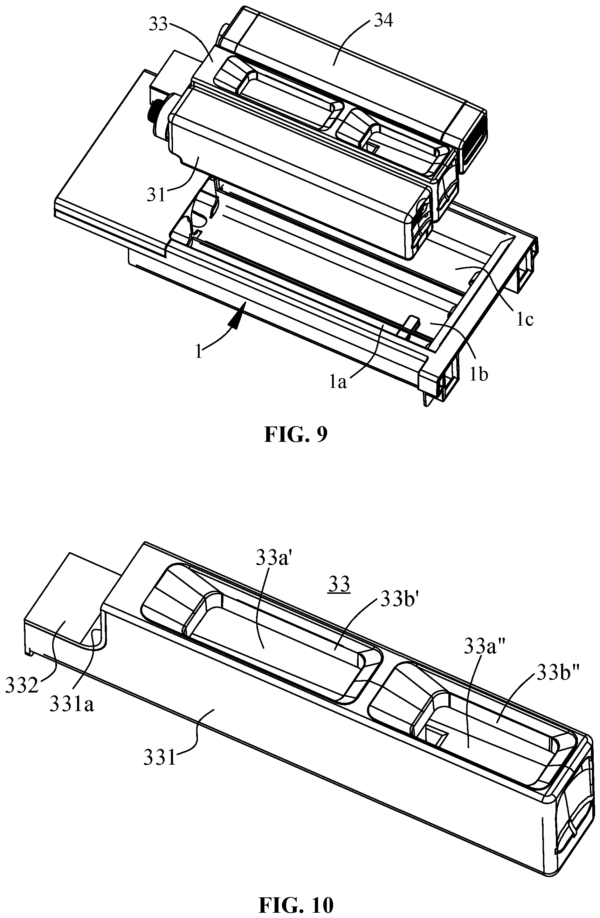

Exemplarily, referring to FIG. 10 and FIG. 12, the hand delivery cartridge 33 has delivery chambers 33a' and 33a", top sides of the delivery chambers 33a' and 33a" have delivery openings 33b' and 33b" respectively, to receive inlet water flow.

Exemplarily, referring to FIG. 10 and FIG. 12, the hand delivery cartridge 33 includes a delivery body 331, and a recessed portion 332 arranged at a rear end of the delivery body 331 and having a space communicated with a space in the delivery body 331, and the delivery chambers 33a' and 33a" are arranged in the delivery body 331. The recessed portion 332 is used as a water outlet portion of the hand delivery cartridge 33, and water flow in the delivery body 331 is discharged through the recessed portion 332.

Exemplarily, referring to FIG. 10 and FIG. 12, a top surface of the recessed portion 332 is lower than a top surface of the delivery body 331 to form a step surface 331a at an interface there-between.

Exemplarily, the recessed portion 332 is substantially flat. Referring to FIG. 12, a bottom wall inside the recessed portion 332 and a bottom wall inside the delivery body 331 form a continuous smooth surface, such that water flow may flow out through the recessed portion 332 along the smooth surface.

Exemplarily, a rear side and a top side of the first mounting groove 1b are opened. Therefore, the dispenser cartridge 1 has a simple structure, which facilitates injection molding, thereby reducing complexity of the mold and reducing production cost.

Specific structure of the first limitation member is not limited.

Exemplarily, the first limitation member includes a front end limitation structure 11 and a rear end limitation structure, at least one of the front end limitation structure 11 or the rear end limitation structure is elastically deformed under an external force, to constrain the detergent bottle or the hand delivery cartridge 33 between the front end limitation structure 11 and the rear end limitation structure.

The external force may be an extrusion force applied to the front end limitation structure 11 or the rear end limitation structure during taking and placing the detergent bottle or the hand delivery cartridge 33.

The front end limitation structure 11 and the rear end limitation structure clamp the detergent bottle or the hand delivery cartridge 33 between them, so that the detergent bottle or the hand delivery cartridge 33 does not move in a front-rear direction.

Exemplarily, the rear end limitation structure includes a first elastic arm 121 having a first end connected to the cartridge body 1' and a second end used as a free end, and the second end of the first elastic arm 121 extends into an opened portion on the rear side of the first mounting groove 1b.

When the detergent bottle is mounted, a rear end of the detergent bottle presses the first elastic arm 121 to force the first elastic arm 121 to deform backward, and then the detergent bottle is released, and the first elastic arm 121 presses bottom of the detergent bottle against the front end limitation structure 11, thus realizing installation and positioning of the detergent bottle.

Specific configuration of the first elastic arm 121 is not limited. For example, in some embodiments, the first elastic arm 121 may be a metal sheet or a metal wire installed onto the cartridge body 1'. In some other embodiments, the first elastic arm 121 and the cartridge body 1' form an integrally molded structure, for example, they are injection molded together

Exemplarily, the front end limitation structure 11 protrudes from a front side wall of the first mounting groove 1b. Each of a front end of the hand delivery cartridge 33 and the bottom of the detergent bottle is provided with a hand digging position which is recessed inwardly. Taking the detergent bottle mounted into the first mounting groove 1b as an example, when the detergent bottle is mounted into the first mounting groove 1b, the front end limitation structure 11 is inserted into the hand digging position at the bottom of the detergent bottle, to restrict upward movement of the detergent bottle.

Formation of the front end limitation structure 11 is not limited. For example, in some embodiments, a separate component defining the front end limitation structure 11 is mounted on the front side wall of the first mounting groove 1b.

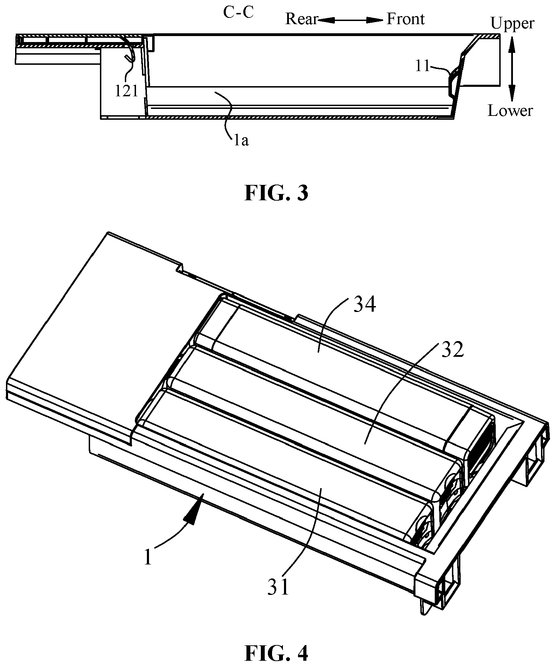

In some other embodiments, referring to FIG. 3 and FIG. 12, the front end limitation structure 11 is recessed inwardly from a part of the front side wall of the first mounting groove 1b, and the recess has a wall thickness smaller than a wall thickness of a structure around the recess, to allow the front end limitation structure 11 to be elastically deformed under the external force. In the embodiment, a thin-wall design is adopted at the recess, such that a small amount of elastic deformation of the front end limitation structure 11 under the external force may occur.

Exemplarily, referring to FIG. 1, the cartridge body 1' has a stopping structure 122 arranged at the opened portion of the first mounting groove 1b. Referring to FIG. 3, FIG. 7 and FIG. 12, the first elastic arm 121 is located behind the stopping structure 122, and the stopping structure 122 is stopping-fitted with the detergent bottle or the hand delivery cartridge 33 in a front-rear direction.

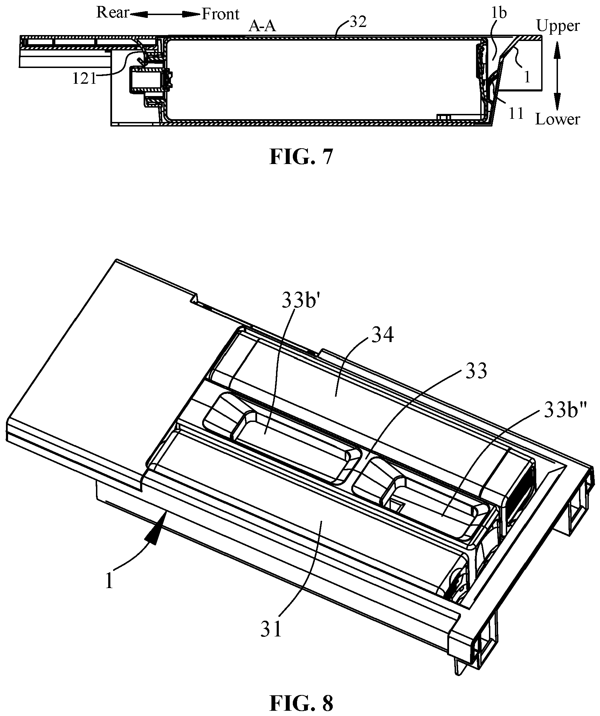

For example, referring to FIG. 7, when the detergent bottle is arranged in the first mounting groove 1b, an end face of bottle body of the detergent bottle is stopping-fitted with the stopping structure 122, and the cap of the detergent bottle abuts against the first elastic arm 121.

Referring to FIG. 12, the step surface 331a as described above is stopping-fitted with the stopping structure 122, when the hand delivery cartridge 33 is arranged in the mounting groove.

The stopping structure 122 may prevent the hand delivery cartridge 33 or the detergent bottle from moving backward excessively, and thus prevent the first elastic arm 121 from being subject to extrusion to become failure and protect the first elastic arm 121.

In some embodiments, after the detergent bottle is mounted in place in the first mounting groove 1b, the detergent bottle is not in contact with the stopping structure 122, and the detergent bottle is constrained and positioned by the first elastic arm 121 and the front end limitation structure 11 only.

When the hand delivery cartridge 33 is mounted in place in the first mounting groove 1b, the hand delivery cartridge 33 is not in contact with the first elastic arm 121, and the hand delivery cartridge 33 is constrained and positioned by the stopping structure 122 and the front end limitation structure 11. The hand delivery cartridge 33 is clamped between the stopping structure 122 and the front end limitation structure 11 by slight deformation of the front end limitation structure 11. Since the hand delivery cartridge 33 is mounted after the whole machine is assembled, and the user does not need to take it out frequently, the hand delivery cartridge 33 is assembled relatively tightly, but the hand delivery cartridge 33 may also be taken out when the user exerts a little effort.

It may be understood that in some other embodiments, the hand delivery cartridge 33 may also be constrained and positioned by the first elastic arm 121 and the front end limitation structure 11 only.

There may be one or multiple mounting grooves. "Multiple" in the embodiment of the application refers to "not less than two".

Referring to FIG. 1 and FIG. 2, the at least one mounting groove is a second mounting groove 1a for mounting another detergent bottle therein and having an opened rear side, the first mounting groove 1b and the second mounting groove 1a are arranged side by side in a left-right direction.

For convenience of description, the detergent bottle placed in the first mounting groove 1b is referred to as a first detergent bottle 32, and the detergent bottle placed in the second mounting groove 1a is referred to as a second detergent bottle 31.

It may be understood that different types of detergents are stored in the first detergent bottle 32 and the second detergent bottle 31, for example, an auxiliary detergent for helping washing such as softener, disinfectant, perfumes, or the like is stored in the first detergent bottle 32, and a detergent is stored in the second detergent bottle 31 and used as a main detergent.

It may be understood that since the washing device may need to equip with the second detergent bottle 31 and the first detergent bottle 32 simultaneously, and since different types of detergents are stored in the second detergent bottle 31 and the first detergent bottle 32, loading of the second detergent bottle 31 and the first detergent bottle 32 cannot be mixed.

For this reason, in an embodiment of the application, referring to FIG. 1, FIG. 2 and FIG. 5, a bottom wall of the first mounting groove 1b is provided with a first fool-proofing protrusion 131 fitted with the detergent bottle, and a bottom wall of the second mounting groove 1a is provided with a second fool-proofing protrusion 132 fitted with the another detergent bottle.

The first fool-proofing protrusion 131 has a shape different from the second fool-proofing protrusion 132, and/or, the first fool-proofing protrusion 131 has a position different from the second fool-proofing protrusion 132. In this way, the second detergent bottle 31 may be installed in the second mounting groove 1a only, and cannot be installed in the first mounting groove 1b; and the first detergent bottle 32 may be installed in the first mounting groove 1b only, and cannot be installed in the second mounting groove 1a, thereby preventing an operator from fitting the detergent bottles mistakenly.

Exemplarily, the second mounting groove 1a is the same size as the first mounting groove 1b, to place detergent bottles with same external dimensions therein. That is, the second detergent bottle 31 as described above has an approximately same external dimension as the first detergent bottle 32, thereby facilitating the manufacture of the detergent bottles by using substantially the same mold and reduce cost.

Exemplarily, the dispenser cartridge 1 further includes a second limitation member arranged in the second mounting groove 1a to constrain the second detergent bottle 31 in the second mounting groove 1 a.

Structure of the second limitation member is not limited.

Exemplarily, the second limitation member includes a second elastic arm and a first limitation protrusion 142 (see FIG. 1), and the second elastic arm may have the same structure as the first elastic arm.

The first limitation protrusion 142 may have the same structure as the front end limitation structure as described above.

Exemplarily, referring to FIG. 1 and FIG. 2, there may be at least three mounting grooves, one of which is a third mounting groove 1c, and the second mounting groove 1a is used to mount a filtering container 34 therein.

Exemplarily, the dispenser cartridge 1 further includes a third limitation member arranged in the third mounting groove 1c to constrain the filtering container 34 in the third mounting groove 1c.

Exemplarily, referring to FIG. 1, the third limitation member includes a third elastic arm 151 and a second limitation protrusion 152, and the third elastic arm 151 may have the same structure as the first elastic arm 121.

The second limitation protrusion 152 may have the same structure as the front end limitation structure as described above.

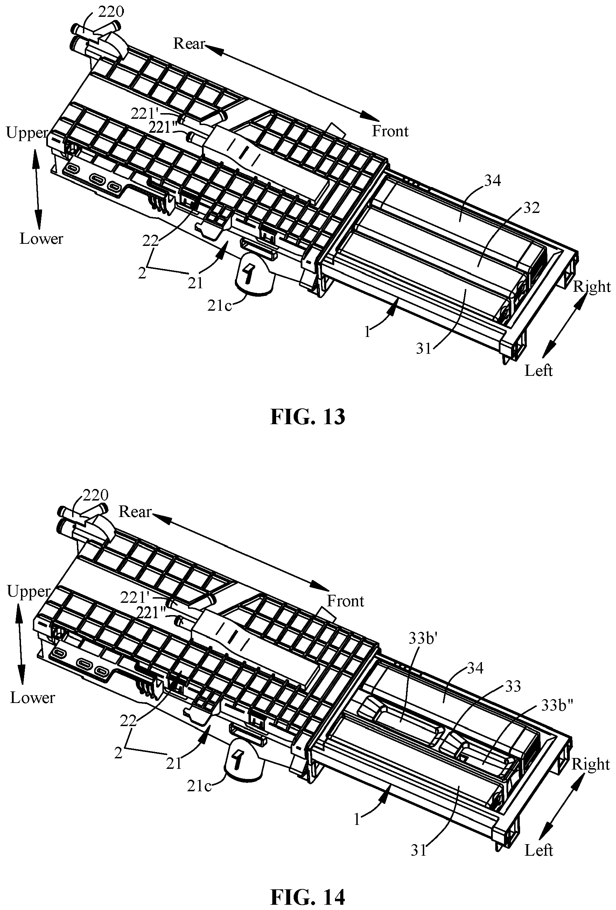

Referring to FIG. 13, FIG. 14 and FIG. 15, the detergent cartridge 2 includes a cartridge body 21 having an opened top side, and a cartridge cover 22 covering an opened portion on the top side of the cartridge body 21. The cartridge body 21 and the cartridge cover 22 together define the drawing space 2a to accommodate the dispenser cartridge 1.

Referring to FIG. 16 and FIG. 17, the cartridge body 21 has a water mixing groove 21a at a bottom thereof, that is, the water mixing groove 21a is located at a lower part of the drawing space 2a.

Referring to FIG. 13, FIG. 14 and FIG. 15, the cartridge cover 22 is provided with first water inlet channels 221' and 221" having water outlets located above the first mounting groove 1b respectively, to guide water flow to the first mounting groove 1b. That is, water flow discharged from the first water inlet channels 221' and 221" flows to the first mounting groove 1b, and then flows from the first mounting groove 1b to the water mixing groove 21a.

Specifically, the water outlets of the first water inlet channels 221' and 221" are aligned with the delivery openings 33b' and 33b", and water flow discharged from the water outlets of the first water inlet channels 221' and 221" falls into the delivery openings 33b' and 33b" naturally and enters into the delivery chambers 33a' and 33a".

It should be noted that water flow in the delivery chambers 33a' and 33a" is converged into the water mixing groove 21a finally.

The delivery pump draws a detergent from a detergent bottle placed in the mounting groove. That is, detergent in the detergent bottle in any the mounting groove is quantitatively drawn by the delivery pump.

Referring to FIG. 16, a rear side wall of the cartridge body 21 is provided with a first avoidance opening 21d" and a first detergent inlet 21f", the first avoidance opening 21d" avoids direct or indirect insertion and extraction fitting between a detergent bottle in the first mounting groove 1b and a drawing opening of a delivery pump, and the first detergent inlet 21f" guides a detergent discharged from the delivery pump into the cartridge body 21.

That is, the first avoidance opening 21d" does not interfere with a process of direct or indirect insertion and extraction between the drawing opening of the delivery pump and the first detergent bottle 32.

Exemplarily, in the embodiment in which the cartridge body 1' is provided with the second mounting groove 1a, further referring to FIG. 16, the rear side wall of the cartridge body 21 is provided with a second avoidance opening 21d' and a second detergent inlet 21 f', the second avoidance opening 21d' avoids direct or indirect insertion and extraction fitting between a detergent bottle in the second mounting groove 1a and the drawing opening of the delivery pump, and the second detergent inlet 21f' guides a detergent discharged from the delivery pump into the cartridge body 21.

That is, the second avoidance opening 21d' does not interfere with a process of direct or indirect insertion and extraction between the drawing opening of the delivery pump and the second detergent bottle 31.

Exemplarily, referring to FIG. 13, FIG. 14 and FIG. 15, the cartridge cover 22 is provided with a second water inlet channel 220 independent of the first water inlet channels 221' and 221", that is, the second water inlet channel 220 and the first water inlet channels 221' and 221" are independently connected to external water sources respectively, independently discharge water respectively, and do not affect each other. The external water sources are introduced through water inlet pipelines.

The second water inlet channel 220 has a water outlet to guide water flow to the water mixing groove 21a. That is, water flow discharged from the second water inlet channel 220 does not flow through any mounting groove.

A water outlet end of the water inlet pipeline is connected to a water inlet of the second water inlet channel 220 or water inlets of the first water inlet channels 221' and 221", to supply water to the second water inlet channel 220 or the first water inlet channels 221' and 221".

For example, when the water inlet pipeline needs to supply water to the second water inlet channel 220, in some embodiments, the water inlet pipeline is only connected to the water inlet of the second water inlet channel 220, and water inlets of the first water inlet channels 221' and 221" are vacant, that is, the water inlets of the first water inlet channels 221' and 221" are not connected to the water inlet pipeline. In some other embodiments, the water inlet of the second water inlet channel 220 is connected to a water inlet pipeline, the water inlets of the first water inlet channels 221' and 221" are connected to another water inlet pipeline, but only the water inlet pipeline connected to the second water inlet channel 220 will be supplied with water, and the water inlet pipeline connected to the water inlets of the first water inlet channels 221' and 221" will not be supplied with water. That is, the water inlet pipeline connected to the water inlets of the first water inlet channels 221' and 221" does not actually function.

When the water inlet pipeline needs to supply water to the first water inlet channels 221' and 221", in some embodiments, the water inlet pipeline is only connected to the water inlets of the first water inlet channels 221' and 221", and the water inlet of the second water inlet channel 220 is vacant, that is, the water inlet of the second water inlet channel 220 is not connected to the water inlet pipeline. In some other embodiments, the water inlets of the first water inlet channels 221' and 221" are connected to a water inlet pipeline, the water inlet of the second water inlet channel 220 is also connected to another water inlet pipeline, but only the water inlet pipeline connected to the first water inlet channels 221' and 221" will be supplied with water, and the water inlet pipeline connected to the water inlet of the second water inlet channel 220 will not be supplied with water. That is, the water inlet pipeline connected to the water inlet of the second water inlet channel 220 does not actually function.

The detergent delivery apparatus according to the embodiment of the application may selectively equip with a detergent bottle or a hand delivery cartridge 33 according to type of the washing device. That is, the detergent delivery apparatus may be used generally by different types of washing devices.

For example, when the configuration of the washing device is of a first type, referring to FIG. 13, the second detergent bottle 31 is placed in the second mounting groove 1a, the first detergent bottle 32 is placed in the first mounting groove 1b, the water inlet pipeline supplies water to the second water inlet channel 220 without supplying water to the first water inlet channels 221' and 221". During operation of the washing device, the delivery pump draws a detergent in the second detergent bottle 31 and a detergent in the first detergent bottle 32, and detergents may be quantitatively drawn by the delivery pump, without user's intervention. The first type of washing device is configured as a type of automatic double-delivery.

When the configuration of the washing device is of a second type, referring to FIG. 14, the second detergent bottle 31 is placed in the second mounting groove 1a, the hand delivery cartridge 33 is placed in the first mounting groove 1b, the water inlet pipeline supplies water to the first water inlet channels 221' and 221" without supplying water to the second water inlet channel 220. In this way, the second type of washing device is configured as a type of combination of automatic single delivery and manual delivery. In this embodiment, detergents required for washing may be delivered into the hand delivery cartridge 33.

As may be seen from the above, according to the detergent delivery apparatus according to the embodiment of the application, the same detergent delivery apparatus may be used generally by washing devices with different configurations. During assembly, the water inlet pipeline may be connected to the water inlets of the first water inlet channels 221' and 221" or connected to the water inlets of the first water inlet channels 221' and 221", according to configured detergents. In this way, generalization rate of parts may be improved, and inventory pressure of sluggish materials may be reduced. For washing devices with different configurations, the detergent delivery apparatus may be manufactured by the same mold, which reduces cost input of the mold and shortens product development cycle.

There may be one, two, or more first water inlet channels 221' and 221". The number of the delivery chambers 33a' and 33a" is the same as the number of the first water inlet channels 221' and 221", and one of the first water inlet channels 221' and 221" discharges water to a corresponding one of the delivery chambers 33a' and 33a".

Exemplarily, referring to FIG. 13, FIG. 14 and FIG. 15, there may be at least two first water inlet channels 221' and 221", and each of the first water inlet channels 221' and 221" is independent of each other, that is, water flows in the first water inlet channels 221' and 221" do not flee to each other. For example, when it is necessary to supply water to the first water inlet channels 221' and 221", there may be at least two water inlet pipelines, one of which is connected to the water inlet of one first water inlet channel 221' and the other of which is connected to the water inlet of the other first water inlet channel 221".

The water outlets of the first water inlet channels 221' and 221" are arranged by staggering in the front-rear direction, to independently discharge water to different parts of the first mounting groove 1b.

Accordingly, referring to FIG. 10, the hand delivery cartridge 33 has at least two delivery chambers 33a' and 33a", in which the water outlet of one first water inlet channel 221' discharges water to one delivery opening 33b', and the water outlet of the other first water inlet channel 221" discharges water to the other delivery opening 33b".

Exemplarily, referring to FIG. 12, the delivery chambers 33a' and 33a" are arranged in the front-rear direction, a rear side of the delivery chamber 33a' located at the rearmost side is opened, and water flow entering into the delivery chamber 33a' located at the rearmost side flows out of the dispenser cartridge 1 from the opened portion at the rear side and flows to the water mixing groove 21a. In this embodiment, washing powder, detergent, or the like may be delivered to the delivery chamber 33a' located at the rearmost side.

Referring to FIG. 12, a front delivery chamber 33a" is communicated to an adjacent rear delivery chamber 33a' through a siphon channel 33c. A fluid detergent for laundry care, such as softener or the like, may be stored in the front delivery chamber 33a". In this way, liquid in the hand delivery cartridge 33 is discharged only from the opened portion at the rear side of the delivery chamber 33a' located at the rearmost side, and thus structure is simple.

It should be noted that the delivery chamber located at the rearmost side refers to a delivery chamber, closest to the rear side, among the delivery chambers.

The front delivery chamber refers to all remaining delivery chambers, except the delivery chamber located at the rearmost side as described above, among the delivery chambers.

For example, when there are two delivery chambers 33a' and 33a", a rear delivery chamber is the delivery chamber 33a' located at the rearmost side as described above, and a delivery chamber 33a' located at the foremost side is the front delivery chamber 33a' as described above.

For another example, when there are three delivery chambers 33a' and 33a", then both a middle delivery chamber and a delivery chamber located at the foremost side are front delivery chambers as described above. The delivery chamber located at the foremost side is communicated to the middle delivery chamber through a siphon channel, and the middle delivery chamber is communicated to the delivery chamber 33a' located at the rearmost side, through another siphon channel.

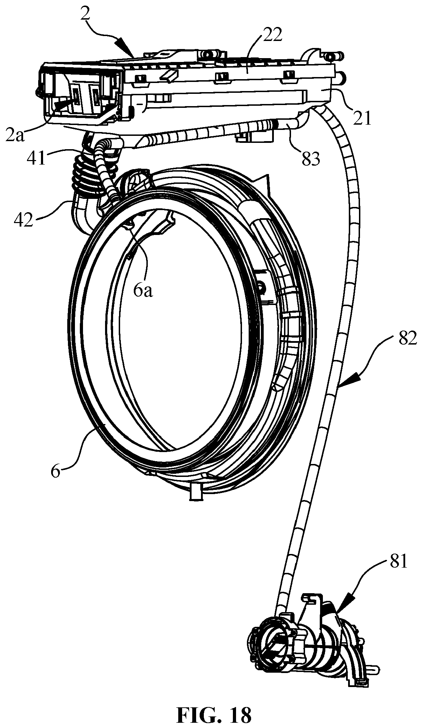

Exemplarily, referring to FIG. 18, the washing device includes a first water outlet channel 41. The door sealing ring 6 has a water injection opening 6a. Referring to FIG. 16 and FIG. 17, the cartridge body 21 has a first water discharging opening 21b communicated with the water mixing groove 21a, and the first water outlet channel 41 is communicated with the first water discharging opening 21b and the water injection opening 6a. That is, water in the water mixing groove 21a is injected into the drum through the first water outlet channel 41 and the water injection opening 6a of the door sealing ring 6, so that a detergent is directly poured into the drum and comes into direct contact with laundries, thus improving utilization rate of the detergent.

Exemplarily, in some embodiments, the drum is provided with lifting ribs. Water passing holes are arranged in areas covered by the lifting ribs on the drum, and no water passing holes are present outside the areas covered by the lifting ribs on the drum, and water-detergent exchange is carried out between the drum and the tub through the water passing holes. In this embodiment, laundries are not in contact with hole edges of the water passing holes, so that wear of the laundries by the hole edges of the water passing holes may be reduced.

In the embodiment in which the door sealing ring 6 has the water injection opening 6a, water-detergent directly enters into the drum, and water injected into the drum slowly enters into the tub through the water passing holes, so that laundries may be soaked as soon as possible, and washing efficiency may be improved.

Exemplarily, referring to FIG. 16 and FIG. 17, the cartridge body 21 has a second water discharging opening 21c, and when water level in the water mixing groove 21a is higher than a preset water level, liquid in the water mixing groove 21a overflows to the second water discharging opening 21c. Referring to the figures, the washing device includes a second water outlet channel 42 guiding water flow discharged from the second water discharging opening 21c to be between the tub and the drum.

In this embodiment, when the water level in the water mixing groove 21a is not higher than an overflowing water level, water in the water mixing groove 21a enters into the first water outlet channel 41 from the first water discharging opening 21b. When the water level in the water mixing groove 21a is higher than the overflowing water level, superfluous water overflows to the second water discharging opening 21c and enters into the second water outlet channel 42. Since the first water outlet channel 41 needs to guide fluid to the water injection opening 6a of the door sealing ring 6, a maximum water flow rate is limited by the water injection opening 6a. While the second water discharging opening 21c and the second water outlet channel 42 may guide water flow to the tub in time in case of overflow, which not only plays a role of safety protection, but also speeds up water inflow.

Manners of the overflowing water level are not limited, for example, in some embodiments, referring to FIG. 16 and FIG. 17, a bottom wall of the cartridge body 21 is provided with a water stopping rib 211, the water mixing groove 21a and the first water discharging opening 21b are located on a first side of the water stopping rib 211, and the second water discharging opening 21c is located on a second side of the water stopping rib 211. Height of a top edge of the water stopping rib 211 is used as the overflowing water level of the water mixing groove 21a. When the water level in the water mixing groove 21a continuously rises to the top edge of the water stopping rib 211, water-detergent spills over the water stopping rib 211, flows from a top side of the water stopping rib 211 to the second side of the water stopping rib 211, and is discharged from the second water discharging opening 21c.

It should be noted that in the embodiments of the application, a detergent container may be purchased by the user and then put into the mounting groove, or it may be arranged in the mounting groove upon leaving the factory. When the hand delivery cartridge 33 needs to be arranged, the hand delivery cartridge 33 is mounted in the second mounting groove when the whole machine leaves the factory. The user may take out and clean the hand delivery cartridge 33 according to usage requirements, and then put it into the second mounting groove again.

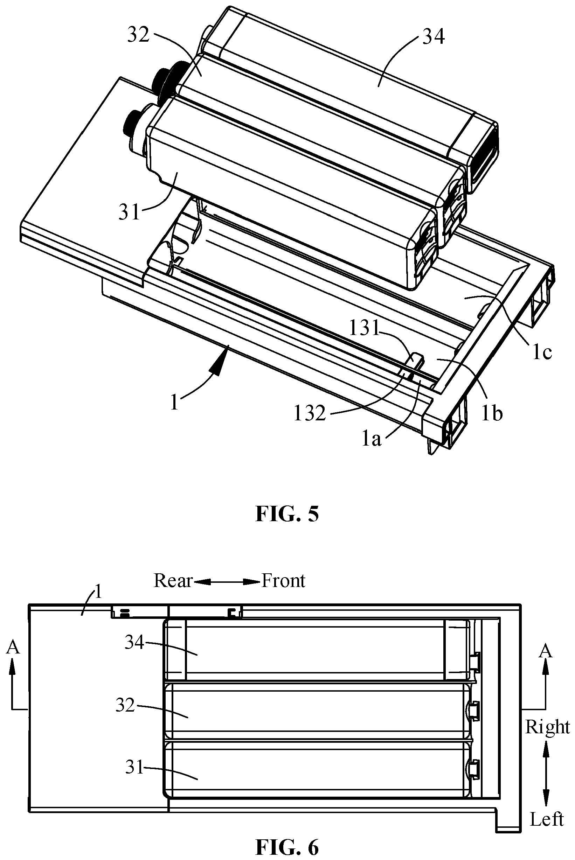

Exemplarily, referring to FIG. 18, the washing device further includes a circulation pump 81, a first circulation channel 82, a second circulation channel 83, and the filtering container 34 (referring to FIG. 5, FIG. 6, FIG. 8, FIG. 9 and FIG. 11). The filtering container 34 is detachably arranged in the third mounting groove 1c.

The first circulation channel 82 communicates an outlet of the circulation pump 81 with a water inlet of the filtering container 34. The circulation pump 81 pumps water-detergent in the tub to the water inlet of the filtering container 34 through the first circulation channel 82.

A water inlet of the second circulation channel 83 is communicated with a water outlet of the filtering container 34, to return water-detergent filtered by the filtering container 34 to the tub or the drum.

In this embodiment, water with debris at the bottom of the tub is pumped by the circulation pump 81 to the water inlet of the filtering container 34. After passing through the filtering container 34, the debris remains in the filtering container 34, and the filtered water flows out through the water outlet of the filtering container 34, to achieve a purpose of circulation and filtering the debris.

In some embodiments, the filtering container 34 may also be provided with a scale inhibition module, a sterilization module, an aromatherapy module and other modules to realize functions of color protection, sterilization, fragrance enhancement, or the like.

It may be understood that in some embodiments, the second circulation channel 83 may directly discharge water discharged from the filtering container 34 into the drum or the tub.

In some other embodiments, referring to the figures, a water outlet end of the second circulation channel 83 is communicated with the first water outlet channel 41, that is, the second circulation channel 83 communicates the water outlet of the filtering container 34 with the first water outlet channel 41. Water in the second circulation channel 83 flows to the drum through the first water outlet channel 41 and the water injection opening 6a. That is, both the first water discharging opening 21b and the second circulation channel 83 are communicated with the first water outlet channel 41, so that the first water outlet channel 41 may be multiplexed, and thus structure is compact.

Exemplarily, referring to FIG. 17, a three-way structure 212 is arranged below the cartridge body 21, a first opening of the three-way structure 212 is used as the first water discharging opening 21b, the water outlet end of the second circulation channel 83 is connected to a second opening 212b, and a water inlet end of the second water outlet channel 42 is connected to a third opening 212a.

It may be understood that in some embodiments, the three-way structure 212 may be a part of structure of the cartridge body 21 and is formed integrally with other parts of the cartridge body 21. In some other embodiments, the three-way structure 212 may be a separate component and may be mounted below the cartridge body 21.

Embodiments of the application provide washing device kits of two different embodiments.

Washing device kit of the first embodiment refers to FIG. 4, FIG. 5, FIG. 6, FIG. 7 and FIG. 13.

The washing device kit includes a first detergent bottle 32, a second detergent bottle 31, and a washing device of any of the above embodiments.

The first detergent bottle 32 is detachably placed in the first mounting groove 1b.

The second detergent bottle 31 is detachably placed in the second mounting groove 1a.

The delivery pump draws a detergent from the first detergent bottle 32 and a detergent from the second detergent bottle 31.

The water inlet pipeline is connected to a water inlet of the second water inlet channel 220, and water inlets of the first water inlet channels 221' and 221" are vacant.

The delivery pump has a first drawing channel and a second drawing channel independent of each other. Liquid in the first drawing channel and liquid in the second drawing channel do not flee to each other, and the first drawing channel and the second drawing channel independently convey detergents respectively. In this embodiment, the delivery pump may also be referred to as a double-delivery pump.

A liquid drawing opening of the first drawing channel draws a detergent in a first detergent container, and the detergent is discharged from a liquid outlet of the first drawing channel and discharged to the water mixing groove 21a through one of detergent inlet openings. A liquid drawing opening of the second drawing channel draws a detergent in a second detergent container, and the detergent is discharged from a liquid outlet of the second drawing channel and discharged to the water mixing groove 21a through another detergent inlet opening.

It should be noted that the first drawing channel and the second drawing channel may not draw liquids simultaneously. In this embodiment, the user may choose to replace by different detergents according to requirements, to flexibly wash laundries, and thus facilitate cleaning. Specifically, the user purchases different types of detergent containers, and the detergent containers receive detergents required by the user respectively, so that the user may take out a current detergent container according to requirements and replace it by a detergent container required for washing this time, and thus it facilitates the user to flexibly replace detergents.

It should be understood that a cover of the detergent container may be opened, and the user may also fill a detergent into the detergent container, and then put the detergent container into the mounting groove. The user may pour the detergent by himself/herself, while purchase of bottled detergent by the user may also be realized.

It should be noted that in some other embodiments, detergents in corresponding detergent containers may also be drawn by two independent delivery pumps independently.

Washing device kit of the second embodiment refers to FIG. 8, FIG. 9, FIG. 11, FIG. 12 and FIG. 14.

The washing device kit includes a hand delivery cartridge 33, a second detergent bottle 31, and a washing device of any of the above embodiments.

The hand delivery cartridge 33 is detachably placed in the first mounting groove 1b and has delivery chambers 33a' and 33a", top sides of the delivery chambers 33a' and 33a" have delivery openings 33b' and 33b" respectively, to receive water flow in the first water inlet channels 221' and 221".

The second detergent bottle 31 is detachably placed in the second mounting groove 1a.

The delivery pump draws a detergent from the first detergent bottle 32 and a detergent from the second detergent bottle 31.

The water inlet pipeline is connected to water inlets of the first water inlet channels 221' and 221", and a water inlet of the second water inlet channel 220 is vacant.

It should be noted that an automatic delivery mode in which the delivery pump draws a detergent in the first detergent container may be turned on or off by the user according to situations.

When the automatic delivery mode is turned on, an operation process of the washing device is as follows.

When the user needs to add an auxiliary detergent for helping washing such as softener, or disinfectant, or the like, the user draws the dispenser cartridge 1 out before washing starts, manually adds the required auxiliary detergent such as softener, or disinfectant, or the like to the front delivery chamber 33a", and then pushes the dispenser cartridge 1 into the detergent cartridge 2.

After washing procedure starts, the delivery pump draws a detergent in the first detergent container and discharges it to the water mixing groove 21a, here one first water inlet channel 221' discharges water to the rear delivery chamber 33a', while water does not enter into the other first water inlet channel 221". It should be noted that in this automatic delivery mode, the user does not need to manually add the detergent to the rear delivery chamber 33a'. Water flow enters into the water mixing groove 21a from an opened portion on the rear side of the delivery chamber 33a', and washes and dissolves the detergent in the water mixing groove 21a. Water-detergent in the water mixing groove 21a enters into the drum through the first water outlet channel 41 and the water injection opening 6a.

At a rinsing stage, the other first water inlet channel 221" discharges water to the front delivery chamber 33a", water flow carrying the auxiliary detergent in the delivery chamber 33a" enters into the rear delivery chamber 33a' through the siphon channel 33c, and then enters into the water mixing groove 21a. Water-detergent in the water mixing groove 21a enters into the drum through the first water outlet channel 41 and the water injection opening 6a.

When the automatic delivery mode is turned off, an operation process of the washing device is as follows.

The user draws the dispenser cartridge 1 out before washing starts, manually adds a detergent or detergent powder to the rear delivery chamber 33a', adds the auxiliary detergent for helping washing such as softener, or disinfectant, or the like to the front delivery chamber 33a", and then pushes the dispenser cartridge 1 into the detergent cartridge 2.

After washing procedure starts, one first water inlet channel 221' discharges water to the rear delivery chamber 33a', while water does not enter into the other first water inlet channel 221". Water flow carrying the detergent in the delivery chamber 33a' enters into the water mixing groove 21a. Water-detergent in the water mixing groove 21a enters into the drum through the first water outlet channel 41 and the water injection opening 6a.

At a rinsing stage, the other first water inlet channel 221" discharges water to the front delivery chamber 33a", water flow carrying the detergent in the delivery chamber 33a" enters into the rear delivery chamber 33a' through the siphon channel 33c, and then enters into the water mixing groove 21a. Water-detergent in the water mixing groove 21a enters into the drum through the first water outlet channel 41 and the water injection opening 6a.

In the description of the application, descriptions of referenced terms "an embodiment", "some embodiments", "example", "specific example", "some examples", or the like, mean that specific features, structures, materials or characteristics described in combination with the embodiment or example are included in at least one embodiment or example of the embodiments of the application. In the application, schematic representations of the above terms are not necessarily directed to the same embodiment or example. Furthermore, the described specific features, structures, materials or characteristics may be combined in a suitable manner in any one or more embodiments or examples. Furthermore, those skilled in the art may combine different embodiments or examples described in the application and features of different embodiments or examples, without conflicting with one another.

The foregoing descriptions are only preferred embodiments of the application and are not intended to limit the application. The application may be subject to various modifications and variations, which is apparent to those skilled in the art. Any modification, equivalent replacement, improvement, or the like made within the spirit and principle of the application should be included in the scope of protection of the application.

## Claims

1. A dispenser cartridge, comprising: a cartridge body having at least one mounting groove, one of which is a first mounting groove; and a first limitation member arranged in the first mounting groove, to constrain a detergent bottle or a hand delivery cartridge in the first mounting groove, such that the detergent bottle and the hand delivery cartridge are interchangeably arranged in the first mounting groove.

2. The dispenser cartridge of claim 1, wherein the first limitation member comprises a front end limitation structure and a rear end limitation structure, at least one of the front end limitation structure or the rear end limitation structure is elastically deformed under an external force, to constrain the detergent bottle or the hand delivery cartridge between the front end limitation structure and the rear end limitation structure.

3. The dispenser cartridge of claim 2, wherein the rear end limitation structure comprises a first elastic arm having a first end connected to the cartridge body and a second end used as a free end, and the second end of the first elastic arm extends into an opened portion of the first mounting groove.

4. The dispenser cartridge of claim 3, wherein the rear end limitation structure comprises a stopping structure arranged at the opened portion of the first mounting groove and stopping-fitted with the detergent bottle or the hand delivery cartridge in a front-rear direction, and the first elastic arm is located behind the stopping structure.

5. The dispenser cartridge of claim 2, wherein the front end limitation structure is recessed inwardly from a part of a front side wall of the first mounting groove, and a recess has a wall thickness smaller than a wall thickness of a structure around the recess, to allow the rear end limitation structure to be elastically deformed under the external force.

6. The dispenser cartridge of claim 1, wherein a rear side and a top side of the first mounting groove are opened.

7. The dispenser cartridge of claim 1, wherein the at least one mounting groove comprises a plurality of mounting grooves, of which another mounting groove is a second mounting groove for mounting another detergent bottle therein and having an opened rear side, the first mounting groove and the second mounting groove are arranged side by side in a left-right direction.

8. The dispenser cartridge of claim 7, wherein a bottom wall of the first mounting groove is provided with a first fool-proofing protrusion fitted with the detergent bottle, and a bottom wall of the second mounting groove is provided with a second fool-proofing protrusion fitted with the another detergent bottle, the first fool-proofing protrusion has a shape different from the second fool-proofing protrusion, and/or the first fool-proofing protrusion has a position different from the second fool-proofing protrusion.

9. The dispenser cartridge of claim 7, wherein the first mounting groove is the same size as the second mounting groove to place detergent bottles with same external dimensions therein.

10. A detergent delivery apparatus, comprising: the dispenser cartridge of any one of claims 1 to 6; and a detergent cartridge comprising a cartridge body, and a cartridge cover provided with a first water inlet channel having a water outlet located above the first mounting groove to guide water flow to the first mounting groove, a rear side wall of the cartridge body provided with a first avoidance opening avoiding direct or indirect insertion and extraction fitting between a detergent bottle in the first mounting groove and a drawing opening of a delivery pump, and a first detergent inlet guiding a detergent discharged from the delivery pump into the cartridge body.

11. The detergent delivery apparatus of claim 10, wherein the at least one mounting groove comprises a plurality of mounting grooves, of which another mounting groove is a second mounting groove for mounting another detergent bottle therein and having an opened rear side, the first mounting groove and the second mounting groove are arranged side by side in a left-right direction, the cartridge body has a water mixing groove at a bottom thereof, the cartridge cover is provided with a second water inlet channel independent of the first water inlet channel and having a water outlet to guide water flow to the water mixing groove, the rear side wall of the cartridge body is provided with a second avoidance opening avoiding direct or indirect insertion and extraction fitting between a detergent bottle in the second mounting groove and the drawing opening of the delivery pump, and a second detergent inlet guiding the detergent discharged from the delivery pump into the cartridge body.

12. A washing device, comprising: a drum; a tub, in which the drum is arranged; the detergent delivery apparatus of claims 10 or 11; a water inlet pipeline supplying water to the detergent delivery apparatus; and a delivery pump drawing a detergent from a detergent bottle placed in the mounting groove.

13. A washing device kit, comprising: a washing device comprising a water inlet pipeline, a delivery pump, a tub, a drum arranged in the tub, and the detergent delivery apparatus of claim 11; a first detergent bottle detachably placed in the first mounting groove; and a second detergent bottle detachably placed in the second mounting groove, the delivery pump drawing a detergent from the first detergent bottle and a detergent from the second detergent bottle, the water inlet pipeline connected to a water inlet of the second water inlet channel, and water inlets of the first water inlet channels being vacant.

14. A washing device kit, comprising: a washing device comprising a water inlet pipeline, a delivery pump, a tub, a drum arranged in the tub, and the detergent delivery apparatus of claim 11; a hand delivery cartridge detachably placed in the first mounting groove and having delivery chambers, top sides of the delivery chambers having delivery openings respectively, to receive water flow in the first water inlet channel; and a second detergent bottle detachably placed in the second mounting groove, the delivery pump drawing a detergent from the first detergent bottle and a detergent from the second detergent bottle, the water inlet pipeline connected to water inlets of the first water inlet channels, and a water inlet of the second water inlet channel being vacant.
